# EUROPÄISCHE PATENTANMELDUNG

(11) **EP 1 153 781 A2**
(43) Veröffentlichungstag der Anmeldung: **14.11.2001**
(21) Anmeldenummer: 01111053.3
(22) Anmeldetag: 08.05.2001
(51) Int. Cl.: B60J 7/12

(54) **Faltverdeck für Fahrzeuge**

(30) Priorität: 08.05.2000 DE 20008096 U
(71) Anmelder: BBG Braunsberger GmbH & Co. KG, 87719 Mindelheim (DE)
(72) Erfinder: Brandner, Hans, 85221 Dachau (DE)
(74) Vertreter: Fiener, Josef

(57) **Zusammenfassung**

Zur einfachen Herstellung eines Faltverdecks für Fahrzeuge, mit einer im Verdeckstoff (2) angeordneten Glasscheibe (3), die einen umschäumten/umspritzten Kunststoff-Rahmen (4) aufweist, wird vorgeschlagen, daß der Verdeckstoff (2) in dem Kunststoff-Rahmen (4) mit eingeschäumt/umspritzt ist.

## Beschreibung

Die Erfindung betrifft ein Faltverdeck für Fahrzeuge, mit einer im Verdeckstoff angeordneten Glasscheibe, die einen umschäumten/umspritzten Kunststoff-Rahmen aufweist.

Ein derartiges Faltverdeck ist aus der EP 0 754 581 A1 bekannt. Hierbei ist die im Verdeckstoff angeordnete Scheibe, insbesondere aus Hartglas, in einem Scheibenrahmen gehalten, insbesondere verklebt. Der Scheibenrahmen ist dann mit Befestigungsmitteln mit dem Verdeckstoff verbunden, der überlappend mit dem Scheibenrahmen angeordnet ist. Durch diese Überlappung des Verdeckstoffes mit dem Scheibenrahmen ergibt sich im Randbereich der Scheibe eine wulstartige Verdickung, die aus designtechnischen Gründen oft unerwünscht ist. Zudem wird an dieser Überlappungsstelle eine mögliche Eintrittstelle für Regenwasser und Flüssigkeit geschaffen, insbesondere falls das Fahrzeug mit Faltverdeck in einer Waschanlage gewaschen würde. Somit sind mehrere Dichtungen erforderlich, um eine halbwegs zuverlässige Abdichtung des Faltverdeckes zu ermöglichen. Hierdurch werden jedoch die Gesamtkosten für das Fahrzeugverdeck relativ hoch.

Demzufolge liegt der Erfindung die Aufgabe zugrunde, ein Faltverdeck für Fahrzeuge zu schaffen, das die vorstehenden Nachteile vermeidet, insbesondere ein einfach aufgebautes und preisgünstiges Faltverdeck bereitstellt.

Diese Aufgabe wird gelöst durch ein Faltverdeck mit den Merkmalen des Anspruches 1. Bevorzugte Ausführungsformen sind Gegenstand der Unteransprüche.

Durch die direkte Einschäumung/Umspritzung des Verdeckstoffes unmittelbar in dem Kunststoff-Rahmen wird der Kunststoff-Rahmen zugleich als Koppelungsstelle zu dem Verdeckstoff genutzt. Hierdurch sind zusätzliche Dichtungen nicht erforderlich, so daß insgesamt die Kosten für die Herstellung des Faltverdeckes sinken. Von weiterem Vorteil ist hierbei die bündige Anordnung zwischen Verdeckstoff und Glasscheibe, also die Ausrichtung in einer Kraftlinie, da durch das gezielte Abwinkeln des Randes des Verdeckstoffes (mittels einer Nocke im Schäumwerkzeug) die Übergangstelle zwischen Glas und Kunststoff-Rahmen auch bei Zugbelastungen am Faltverdeck nahezu belastungsfrei gehalten wird. Hierdurch wird eine hohe Festigkeit des Faltverdeckes geschaffen und ein sehr schmaler Scheibenrahmen ermöglicht. Dadurch wird die Klappfähigkeit des Faltverdeckes wesentlich verbessert. Zudem ergibt sich durch den Wegfall von Dichtungen und Stoßstellen eine optimale Dichtheit des Faltverdeckes.

Nachfolgend wird ein Ausführungsbeispiel des Faltverdeckes anhand der Zeichnung näher erläutert und beschrieben. Hierbei zeigen:
- Fig. 1: ein Schäumwerkzeug für die Herstellung des vorgeschlagenen Faltverdeckes;
- Fig. 2: eine schematische Draufsicht auf einen zusätzlich verstärkten Rand des Verdeckstoffes gemäß der Schnittlinie A-A in Fig. 1; und
- Fig. 3: eine abgewandelte Ausführungsform des Schäumwerkzeuges für die Herstellung des Faltverdeckes.

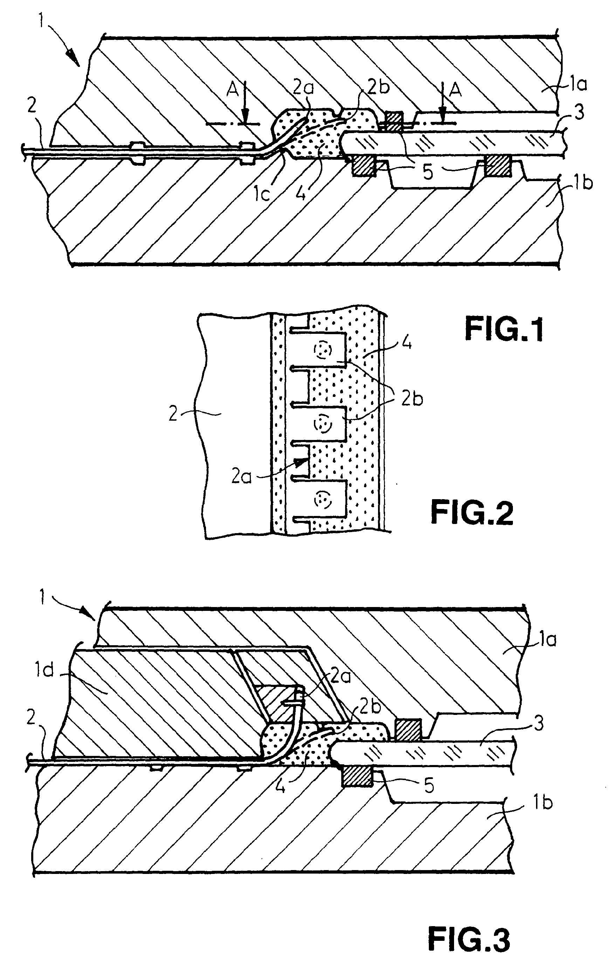

In Fig. 1 ist ein Schäumwerkzeug 1 bestehend aus einem WerkzeugOberteil 1a und einem Werkzeug-Unterteil 1b im Querschnitt gezeigt. In das geöffnete Schäumwerkzeug 1 werden eine Glasscheibe 3 und ein Verdeckstoff 2 eingelegt. Nach Schließen des Schäumwerkzeuges 1 wird die Glasscheibe 3 durch Dichtungen 5 fixiert, ebenso der Verdeckstoff 2 zwischen dem Ober- und Unterteil 1a, 1b. Bevorzugt wird dabei der Rand 2a des Verdeckstoffes 2 durch eine wulstartige Nocke 1c geklemmt und um ca. 30° oder mehr hochgespreizt. Für die Ausbildung des Kunststoff-Rahmens 4 wird somit ein Hohlraum geschaffen, in den der Rand 2a des Verdeckstoffes 2 hineinragt. Die Einspritzung des Schäummaterials in diesen punktiert dargestellten Hohlraum zur Bildung des Kunststoff-Rahmens erfolgt in bekannter Weise.

In Fig. 2 ist der Rand 2a des Verdeckstoffes 2 entlang der Schnittlinie A-A in Fig. 1 gezeigt. Hieraus ist ersichtlich, daß der Rand 2a in eine Vielzahl von Verdeckstofflappen 2b eingeschnitten sein kann, obwohl im allgemeinen ein geradliniger Zuschnitt des Randes 2a ausreicht und wegen des einfacheren Zuschnittes daher bevorzugt ist. Durch die Klemmung mit der Nocke 1c ergibt sich somit eine Hochspreizung des Randes 2a bzw. eine unterschiedliche Aufspreizung der Lappen 2b, so daß der Rand 2a bzw. die Lappen 2b sicher in dem Kunststoff-Rahmen 4 eingebettet sind. Hierdurch ergibt sich eine besonders hohe Ausreißfestigkeit des Verdeckstoffes 2 gegenüber dem Kunststoff-Rahmen 4. Das Maß der Auseinanderspreizung der Lappen 2b kann dabei durch unterschiedliche Längen unterstützt werden, so daß sich insgesamt eine besonders sichere Verankerung des Verdeckstoffes 2 ergibt. In den Rand 2a bzw. die Lappen 2b, dessen bzw. deren Verlauf auch wellenförmig gestaltet sein kann/können, können zudem Durchbrüche eingestanzt sein, um eine Durchdringung und damit formschlüssige Einbindung in das Schaummaterial zu erreichen.

In Fig. 3 ist eine abgewandelte Ausführungsform des Schäumwerkzeuges 1 dargestellt. Hierbei ist der Rand 2a oder einzelne Lappen 2b des Verdeckstoffes 2 an einem Schieber 1d des Schäumwerkzeuges 1 befestigt. Hierdurch ergibt sich eine besonders sichere Halterung und Fixierung des Verdeckstoffes 2 innerhalb des Schäumwerkzeuges 1. Auch hier ist, wie in Fig. 2 dargestellt, der Rand 2a des Verdeckstoffes 2 in eine Vielzahl von Verdeckstofflappen 2b unterteilt, so daß sich eine sichere Einbettung im Kunststoff-Rahmen 4 ergibt. Die über den späteren Kunststoff-Rahmen 4 hinausstehenden Lappen 2b werden nach der Ausformung bündig mit dem Kunststoff-Rahmen 4 abgeschnitten. Es sei darauf hingewiesen, daß pro Faltverdeck beispielsweise sechs oder acht derartige überstehende Verdeckstofflappen 2b am Rand 2a ausreichen, um eine besonders sichere Fixierung des Verdeckstoffes 2 im Schäumwerkzeug 1 zu gewährleisten, auch wenn -wie oben angegeben- ein geradliniger Zuschnitt des Randes 2a für die allermeisten Festigkeitsanforderungen ausreicht.

Insgesamt ergibt sich somit ein besonders einfach herzustellendes Faltverdeck, das hinsichtlich ästhetischer Gestaltung mit bündiger Oberseite und sehr schmalem Rahmen 4 höchste Ansprüche erfüllt. Zudem wird durch die bündige Anordnung der Glasscheibe 3, des Kunststoff-Rahmens 4 und des Verdeckstoffes 2 eine günstige Krafteinleitung in den Kunststoff-Rahmen 4 und damit eine hohe Gesamt-Festigkeit bei guter Faltbarkeit gewährleistet. Durch die Abwinkelung des Randes 2a in den Hohlraum für den Kunststoff-Rahmen 4 hinein, was durch die Nocke 1c zum Hochspreizen des Randes 2a erreicht wird, kann zudem der Kraftverlauf so gestaltet werden, daß die bündige Stoßstelle zwischen Glas und Rahmen nahezu balastungsfrei bleibt. Dadurch kann ein Aufklaffen dieser Stoßstelle entlang des Scheibenrandes sicher vermieden werden.

## Patentansprüche

1. Faltverdeck für Fahrzeuge, mit einer im Verdeckstoff (2) angeordneten Glasscheibe (3), die einen umschäumten/umspritzten Kunststoff-Rahmen (4) aufweist, **dadurch gekennzeichnet, daß** der Verdeckstoff (2) in dem Kunststoff-Rahmen (4) mit eingeschäumt/umspritzt ist.

2. Faltverdeck nach Anspruch 1, **dadurch gekennzeichnet, daß** der Verdeckstoff (2) zumindest im wesentlichen in einer Ebene fluchtend mit der Glasscheibe (3) verlaufend angeordnet ist.

3. Faltverdeck nach Anspruch 1 oder 2, **dadurch gekennzeichnet, daß** der Verdeckstoff (2) an seinem Rand (2a) um weniger als 90° umgekantet ist.

4. Faltverdeck nach einem der Ansprüche 1 bis 3, **dadurch gekennzeichnet, daß** die Glasscheibe (3), der Kunststoff-Rahmen (4) und der Verdeckstoff (2) zur Außenseite des Fahrzeuges hin bündig sind.

5. Faltverdeck nach einem der Ansprüche 1 bis 4, **dadurch gekennzeichnet, daß** der Rand (2a) des Verdeckstoffes (2) eingeschnitten ist und die dadurch gebildeten Verdeckstofflappen (2b) auseinandergespreizt in den Kunststoff-Rahmen (4) eingebettet sind.

6. Faltverdeck nach einem der Ansprüche 1 bis 5, **dadurch gekennzeichnet, daß** zum Auseinander-/Hochspreizen des Randes (2a) des Verdeckstoffes (2) am Schäumwerkzeug (1) wenigstens eine wulstförmige Nocke (1c) ausgebildet ist.

7. Faltverdeck nach Anspruch 5 oder 6, **dadurch gekennzeichnet, daß** die Verdeckstofflappen (2b) unterschiedlich lang sind.

8. Faltverdeck nach einem der Ansprüche 5 bis 7, **dadurch gekennzeichnet, daß** wenigstens einige der Verdeckstofflappen (2b) oder der gesamte Rand (2a) im Schäumwerkzeug (1) fixiert sind/ist.

9. Faltverdeck nach Anspruch 8, **dadurch gekennzeichnet, daß** die Enden der im Schäumwerkzeug (1) befestigten Verdeckstofflappen (2b) über den Kunststoff-Rahmen (4) hinausstehen.

10. Faltverdeck nach Anspruch 8 oder 9, **dadurch gekennzeichnet, daß** die Verdeckstofflappen (2b) an einem Schieber (1d) des Schäumwerkzeuges (1) befestigt sind.
